# EUROPÄISCHE PATENTSCHRIFT

(11) **EP 2 805 781 B1**
(45) Veröffentlichungstag und Bekanntmachung des Hinweises auf die Patenterteilung: **13.07.2016**
(21) Anmeldenummer: 14001809.4
(22) Anmeldetag: 22.05.2014
(51) Int. Cl.: B21D 26/033, B62D 25/00, B62D 29/00

(54) **Hohlprofil für eine Trägerstruktur eines Fahrzeugs**
Hollow profile for a support structure of a vehicle
Profilé creux pour une structure porteuse d'un véhicule

(30) Priorität: 24.05.2013 DE 102013008916
(43) Veröffentlichungstag der Anmeldung: 26.11.2014
(73) Patentinhaber: AUDI AG, 85045 Ingolstadt (DE)
(72) Erfinder: Gotthelf, Matthias, DE - 74861 Neudenau (DE); Ciklakarsli, Esref, DE - 74177 Bad Friedrichshall (DE); Urban, Tobias, DE - 74354 Besigheim-Ottmarsheim (DE); Maier, Hans-Peter, DE - 85283 Wolnzach (DE)
(74) Vertreter: Patzelt, Heike Anna Maria

(56) Entgegenhaltungen:
- EP-A2- 0 894 698
- EP-B1- 0 733 539
- DE-A1- 19 803 738
- DE-B3-102004 034 519

## Beschreibung

Die Erfindung betrifft ein Hohlprofil für eine Trägerstruktur eines Fahrzeugs gemäß dem Oberbegriff des Patentanspruchs 1.

Die Verwendung von Mehrkammerhohlprofilen als Längs- oder Querträger zur Herstellung von Fahrzeugkarosserien ist bekannt.

So werden Aluminiumhohlprofile mit einer Kammer oder mehreren Kammern als Träger insbesondere im Fahrzeugleichtbau wegen ihrer guten Festigkeits- und Steifigkeitseigenschaften eingesetzt. Weitere Vorteile ergeben sich durch die mögliche Realisierung von Wanddickenvariationen im Querschnitt als auch durch eine freie Flanschgestaltung. In der Regel werden solche Hohlprofile weiteren Umformoperationen, wie beispielsweise Innenhochdruckumformen (IHU) unterzogen. Insbesondere bei der Weiterverarbeitung von Mehrkammerprofilen treten Probleme bei Querschnittsänderungen in der Längs- als auch Querrichtung des Profils auf, da bei solchen plastischen Verformungen der Innensteg bzw. die Innenstege des Mehrkammerprofils derart verändert wird bzw. werden, dass dadurch die Steifigkeit und Festigkeit des Trägers in diesem Bereich vermindert wird.

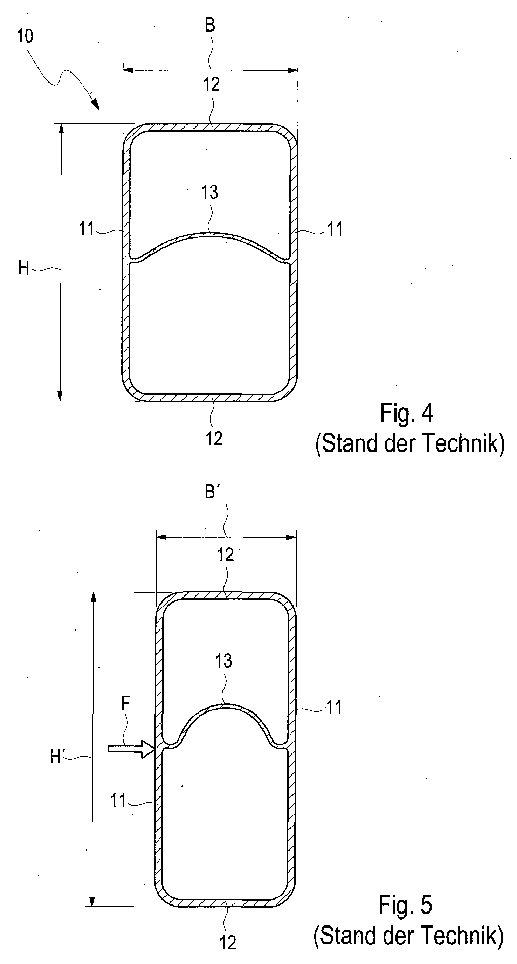

Eine solche Situation zeigen die Figuren 4 und 5. Gemäß Figur 4 ist ein Querschnitt eines als Längsträger ausgebildeten Grundprofils 10 dargestellt, welches nach einer Umformung eines Endabschnittes dieses Grundprofils 10 einen Querschnitt nach Figur 5 aufweist.

Das als Mehrkammerprofil ausgebildete Längsträger 10 weist nach Figur 4 einen rechteckförmigen Querschnitt mit jeweils zwei gegenüberliegenden Seitenwänden 11 und 12 auf, wobei zur Bildung von zwei Innenkammern ein parallel zu den beiden Seitenwänden 12 verlaufender Innensteg 13 vorgesehen ist, welcher in Richtung einer Seitenwand 12 vorbombiert ist, also eine Wölbung aufweist. Durch die Umformung, bspw. mit Innenhochdruckumformen eines Endabschnittes des Grundprofils 10 wird gegenüber dem Querschnitt mit einer Breite B und einer Länge L nach Figur 4 ein Querschnitt mit einer verringerten Breite B' und einer verlängerten Länge L' erzeugt, wie dies in Figur 5 dargestellt ist. Durch die Verringerung der Breite B des Grundprofils 10 wird die Pombierung des Innenstegs 13 verstärkt, so dass die seitliche Abstützwirkung gegenüber einer einwirkenden Kraft F sehr stark verringert wird.

Aus der EP 0 894 698 A2 ist ein gattungsbildendes Hohlprofil als Querträger für Fahrzeuge bekannt. Um einen Querträger mit im Verformungsfall kontrolliertem Deformationsverhalten zu schaffen, sind an dem Querträger zwei Aufprallflächen vorgesehen, die in einer Ebene liegend und senkrecht zur Profilrichtung verlaufen. An den Längsseiten der Aufprallflächen schließen sich jeweils ein äußerer Steg und ein innerer Steg an, wobei die inneren Stege eine Hohlkehle zwischen den beiden Aufprallflächen bilden. Ausgehend von den Fußpunkten dieser beiden inneren Stege erstreckt sich ein mittlerer Steg zur gegenüberliegenden Seitenwand des Hohlprofils. Die einer Aufprallfläche zugeordneten Stege sind jeweils gleichsinnig schräg zu einer Aufprallrichtung angestellt, so dass hierdurch ein weich ausgebildeter Querschnittsbereich entsteht, der ohne dass Kraftspitzen entstehen die Verformung des Querträgers einleitet.

Ferner beschreibt die DE 10 2004 034 519 B3 einen als Hohlprofil ausgebildeten Träger mit zumindest einer Profilkammer. Eine solche Profilkammer wird von mehreren Profilstegen gebildet, wobei zumindest ein Profilsteg einen Verstärkungsprofilsteg bildet und in zumindest zwei Stegverbindungen mit anderen Profilstegen des Hohlprofils verbunden ist sowie über seine zwischen den Stegverbindungen gemessene Steglänge einen sich veränderten Querschnitt aufweist. Für ein optimiertes Deformationsverhalten des Trägers ist der Querschnitt ausgehend von den beiden Stegverbindungen bis zur Stegmitte erweitert.

Weiterhin ist aus der DE 198 03 738 A1 ein Verfahren zum Herstellen von Hohlprofil-Bauteilen mit in Längsrichtung unterschiedlichen Querschnitten bekannt, bei dem zunächst ein Hohlprofil mechanisch vorprofiliert und anschließend in einem Formwerkzeug über seine Gesamtlänge durch Hydroumformung aufgeweitet wird. Um bei der Umformung trotz unterschiedlicher Querschnittsformen im Wesentlichen überall die gleiche Wandstärke zu erhalten, wird zur Hydroumformung ein Hohlprofil verwendet, das mindestens eine Seitenwand umfasst, welche in einem Teilbereich mehrfach gefaltet ist. Dabei sind diese Falten derart gewählt, dass sich bei dem Aufweiten des Hohlprofils durch das "Geradeziehen" der Falten unterschiedliche Querschnitte ergeben.

Aus der EP 0 733 539 B1 ist ein Verfahren zur Herstellung eines Hohlprofils für eine Trägerstruktur eines Kraftfahrzeugs bekannt, bei dem das Hohlprofil zumindest eine Zwischenwand aufweist. Dieses Hohlprofil wird aus einem als Strangpreßprofil ausgebildeten Grundprofil hergestellt, in welchem ein vorprofilierter Innensteg oder mehrere vorprofilierte Innenstege in ihrer Länge und Lage derart angeordnet ist bzw. sind, dass dieser bzw. diese beim Aufweiten des Grundprofils im Innenhochdruck-Umformverfahren in eine gestreckte Endstellung überführt wird bzw. werden, um die wenigstens eine Zwischenwand des Hohlprofil zu bilden. Mit einem gemäß diesem bekannten Verfahren hergestellten Hohlprofil sollen in dessen Längsrichtung unterschiedliche Querschnitte realisierbar sein, so dass ein solches Hohlprofil im Bereich von Anbauteilen, wie Türscharnieren, Schlossbolzen oder Gurtbefestigungen eine ausreichende Festigkeit aufweist, ohne dass hierzu nachträglich Verstärkungen erforderlich sein sollen. Das oben genannte Problem tritt jedoch bei diesem bekannten Verfahren nicht auf, da zur Erzeugung des Hohlprofils das Grundprofil gleichmäßig in alle Richtungen so aufgeweitet wird, bis die Innenstege gestreckt sind.

Aufgabe der Erfindung ist es, ein Hohlprofil für eine Trägerstruktur eines Fahrzeugs mit wenigstens einem Innensteg anzugeben, welches abschnittweise derart plastisch verformt werden kann, dass das entstehende Hohlprofil eine maximale seitliche, in Richtung des Innensteges wirkende Abstützung bietet.

Diese Aufgabe wird gelöst durch ein Hohlprofil mit den Merkmalen des Patentanspruchs 1.

Ein solches Hohlprofil für eine Trägerstruktur eines Fahrzeugs, welches aus einem Grundprofil durch dessen abschnittsweises Umformen gebildet ist, so dass das Hohlprofil mindestens einen nicht ungeformten Abschnitt und einen ungeformten Abschnitt aufweist, wobei das Grundprofil wenigstens einen an gegenüberliegenden Seitenwänden angebundenen Innensteg aufweist und die Querschnittsform des den nicht umgeformten Abschnitt aufweisenden Grundprofils im Übergangsbereich des Innensteges zu der Seitenwand mit einer Einschnürung ausgebildet ist, zeichnet sich erfindungsgemäß dadurch aus, dass
- der Innensteg im Verhältnis zu den Seitenwänden des Grundprofils mit einem konstanten Querschnitt aufgedickt ausgebildet ist, und
- die die Einschnürung aufweisende Seitenwand im umgeformten Abschnitt in eine gestreckte und gerade Seitenwand übergeht, und
- die zum Innensteg parallel verlaufenden Seitenwände des umgeformten Abschnittes mit einer der Breite des Innensteges entsprechenden Breite ausgebildet sind.

Das gewünschte Ergebnis wird somit zum einen durch eine Aufdickung des Innenstegs gegenüber den Seitenwänden erreicht und zum anderen dadurch, dass eine Seitenwand nicht gerade, sondern im Übergangsbereich zum Innensteg eine Einschnürung aufweist, die in Bezug auf diese Seitenwand eine in Längsrichtung des Grundprofils verlaufende Einbuchtung darstellt, so dass durch die Umformung des Grundprofils diese Seitenwand quasi "geradegezogen", also in eine nahezu geradlinig gestreckte Form übergeht und parallel zur gegenüberliegenden Seitenwand verläuft. Dabei wird die Breite des Grundprofils außerhalb der Einschnürung bis auf die Breite des Innensteges verkürzt und gleichzeitig die Höhe des Grundprofils entsprechend verlängert.

Nach einer vorteilhaften Ausgestaltung der Erfindung ist der umgeformte Abschnitt mit einer gegenüber dem Grundprofil geänderten Querschnittsform mit unverändertem Umfang ausgebildet. Somit wird durch die Umformung nur die Querschnittsform geändert, so dass die Wandstärken der Seitenwände erhalten bleiben. Vorzugsweise sind dabei die zum Innensteg parallel verlaufenden Seitenwände des Grundprofils gegenüber der Länge des Innensteges um die Einschnürtiefe verbreitert.

Nach einer letzten Weiterbildung der Erfindung ist der umgeformte Abschnitt des Grundprofils durch Innenhochdruckumformen des Grundprofils hergestellt.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung eines Hohlprofils als Ausführungsbeispiel der Erfindung,
- Figur 2: eine Schnittdarstellung gemäß Schnitt I-I nach Figur 1,
- Figur 3: eine weitere Schnittdarstellung gemäß Schnitt II-II nach Figur 1,
- Figur 4: eine Schnittdarstellung eines Grundprofils gemäß Stand der Technik, und
- Figur 5: eine Schnittdarstellung des aus dem Grundprofil nach Figur 4 durch Umformung erzeugten Hohlprofils.

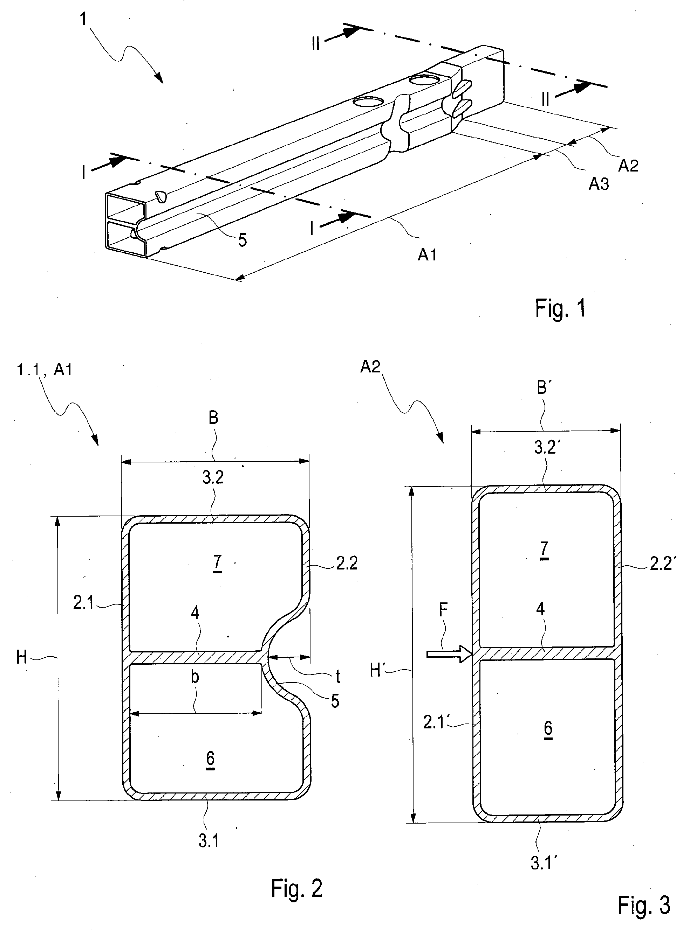

Figur 1 zeigt ein erfindungsgemäß aus einem Grundprofil 1.1 mit einem Querschnitt gemäß Figur 2 hergestelltes Hohlprofil 1 mit mehreren Abschnitten A1, A2 und A3, wobei Abschnitt A1 diesem Grundprofil 1.1 entspricht, also nicht umgeformt ist und Abschnitt A2 nach der Umformung den in Figur 3 dargestellten Querschnitt aufweist. Den Übergang von Abschnitt A1 zu Abschnitt A2 bildet ein Übergangsabschnitt A3.

Der Querschnitt des Grundprofils 1.1 nach Figur 2 ist im Wesentlichen rechteckförmig mit zwei gegenüberliegenden Seitenwänden 2.1 und 2.2 sowie zwei weiteren gegenüberliegenden Seitenwänden 3.1 und 3.2 ausgebildet. Der Querschnitt dieses Grundprofils 1.1 wird von einem Innensteg 4 geteilt, so dass zwei Kammern 6 und 7 entstehen. Im Übergang des Innensteges 4 zur Seitenwand 2.2 weist diese Seitenwand 2.2 eine Einschnürung 5 auf, die sich in Profilrichtung des Grundprofils 1.1 erstreckt. Die gegenüberliegende Seitenwand 2.1 ist dagegen eben ausgebildet, so dass sich sowohl der Innensteg 4 als auch die beiden Seitenwände 3.1 und 3.2 senkrecht hierzu verlaufen. Die Breite B des Grundprofils 1.1 ist gegenüber der Breite b des Innensteges 4 um die Einschnürtiefe t verbreitert.

Der Innensteg 4 ist gegenüber den Seitenwänden 2.1, 2.2, 3.1 und 3.2 aufgedickt, so dass nach einer Umformung des Grundprofils 1.1 in den Abschnitt A2 dieser Innensteg 4 unverformt bleibt. Die Seitenwände 1.2, 3.1 und 3.2 sowie die die Einschnürung 5 aufweisende Seitenwand 2.2 sind dagegen derart ausgelegt, dass nach einer Umformung in den Abschnitt A2 des Hohlprofils 1 die Seitenwand 2.2 eine ebene Fläche bildet, also die Einschnürung 5 während der Umformung quasi "geradegezogen" wird. Dadurch entsteht ein rechteckförmiger Querschnitt mit geraden Seitenwänden 2.1', 2.2', 3.1' und 3.2'.

Durch diese Umformung verringert sich die Breite B des Grundprofils 1.1 auf eine der Breite b des Innensteges 4 entsprechenden Breite B', während sich die Höhe H des Grundprofils 1.1 auf die Höhe H' des Abschnittes A2 erhöht. Bei dieser Umformung verändert sich nur die Querschnittsform des Grundprofils 1.1, jedoch nicht der durch die Seitenwände 2.1, 2.2, 3.1 und 3.2 gegebene Umfang. Dadurch ändern sich die Wandstärken der Seitenwände 2.1, 2.2, 3.1 und 3.2 durch die Umformung nicht, so dass die Steifigkeit des Grundprofils 1.1 bei der Umformung in das Hohlprofil 1 erhalten bleibt. Insbesondere wird bei einem Krafteintrag F in Richtung des Innensteges 4 wegen dessen Aufdickung gegenüber den Seitenwänden 2.1', 2.2', 3.1' und 3.2' eine maximale seitliche Abstützwirkung durch das Hohlprofil 1 entlang der gesamten Länge erreicht.

Die Umformung des Grundprofils 1.1 das Hohlprofil 1 erfolgt mittels eines Innenhochdruckumformprozesses, wobei als Material für die Herstellung des Grundprofils 1.1 Leichtmetall, wie beispielsweise Aluminium oder Magnesium, als auch Stahl verwendet werden kann.

### Bezugszeichen

- 1: Hohlprofil
- 1.1: Grundprofil
- 2.1: Seitenwand des Grundprofils 1.1
- 2.1',: Seitenwand des Abschnittes A2
- 2.2: Seitenwand des Grundprofils 1.1
- 2.2': Seitenwand des Abschnittes A2
- 3.1: Seitenwand des Grundprofils 1.1
- 3.1': Seitenwand des Abschnittes A2
- 3.2: Seitenwand des Grundprofils 1.1
- 3.2': Seitenwand des Abschnittes A2
- 4: Innensteg des Grundprofils 1.1
- 5: Einschnürung
- 6: Kammer des Hohlprofils 1
- 7: Kammer des Hohlprofils 1

- 10: Grundprofil gemäß Stand der Technik
- 11: Seitenwände des Grundprofils 10
- 12: Seitenwände des Grundprofils 10
- 13: Innensteg des Grundprofils 10

- A1: Abschnitt des Hohlprofils 1
- A2: Abschnitt des Hohlprofils 1
- A3: Übergangsabschnitt des Hohlprofils 1

## Patentansprüche

1. Hohlprofil (1) für eine Trägerstruktur eines Fahrzeugs, welches aus einem Grundprofil (1.1) durch dessen abschnittsweises Umformen gebildet ist, so dass das Hohlprofil (1) mindestens einen in Profilrichtung verlaufenden nicht umgeformten Abschnitt (A1) und einen in Profilrichtung verlaufenden umgeformten Abschnitt (A2) aufweist, wobei das Grundprofil (1.1) wenigstens einen an gegenüberliegenden Seitenwänden (2.1, 2.2) angebundenen Innensteg (4) aufweist und die Querschnittsform des den nicht umgeformten Abschnitt (A1) aufweisenden Grundprofils (1.1) im Übergangsbereich des Innensteges (4) zu einer Seitenwand (2.2) mit einer Einschnürung (5) ausgebildet ist,
**dadurch gekennzeichnet, dass**
- der Innensteg (4) im Verhältnis zu den Seitenwänden (2.1, 2.2, 3.1, 3.2) des Grundprofils (1.1) mit einem konstanten Querschnitt aufgedickt ausgebildet ist,
- die die Einschnürung (5) aufweisende Seitenwand (2,2) im umgeformten Abschnitt (A2) in eine gestreckte und gerade Seitenwand (2.2') übergeht, und
- die zum Innensteg (4) parallel verlaufenden Seitenwände (3.1, 3.2) des umgeformten Abschnittes (A2) mit einer der Breite (b) des Innensteges (4) entsprechenden Breite (B) ausgebildet sind.

2. Hohlprofil (1) nach Anspruch 1,
**dadurch gekennzeichnet, dass** der umgeformte Abschnitt (A2) mit einer gegenüber dem Grundprofil (1.1) geänderten Querschnittsform mit unverändertem Umfang ausgebildet ist.

3. Hohlprofil (1) nach Anspruch 1 oder 2,
**dadurch gekennzeichnet, dass** die zum Innensteg (4) parallel verlaufenden Seitenwände (3.1, 3.2) des Grundprofils (1.1) gegenüber der Breite (b) des Innensteges (4) um die Einschnürtiefe (t) verbreitert sind.

4. Hohlprofil (1) nach einem der vorhergehenden Ansprüche,
**dadurch gekennzeichnet, dass** der umgeformte Abschnitt (A2) des Grundprofils (1.1) durch Innenhochdruckumformen des Grundprofils (1.1) hergestellt ist.

## Claims

1. Hollow profile (1) for a support structure for a motor vehicle, consisting of a basic profile (1.1) which is reshaped section by section in such a way that the hollow profile (1) displays at least one section running in the direction of the profile which has not been reshaped (A1) and one section running in the direction of the profile which has been reshaped (A2), wherein the basic profile (1.1) has at least one internal web (4) fixed to opposing side walls (2.1,2.2) and the cross-sectional shape of the section (A1) of the basic profile (1.1) which has not been reshaped in the transitional area of the internal web (4) to a sidewall (2.2) is formed with a constriction(5), **characterised in that**
- the internal web (4) in comparison to the side walls (2.1,2.2,3.1,3.2) of the basic profile (1.1) is formed thickened with constant cross-section,
- the side wall (2.2) displaying the constriction (5) in the reshaped section (A2) merges into a straight and extended side wall (2.2'), and
- the side walls (3.1, 3.2) running parallel to the internal web (4) in the reshaped section (A2) are formed with a width (B) corresponding to the width (b) of the internal web (4).

2. Hollow profile (1) according to claim 1, **characterised in that** the reshaped section (A2) is formed with an altered cross-sectional shape compared to the basic profile (1.1) in an unaltered extent.

3. Hollow profile (1) according to claim 1 or 2, **characterised in that** the side walls (3.1, 3.2) of the basic profile (1.1) running parallel to the internal web (4) have been widened by the depth of the constriction (t) compared to the width (b) of the internal web (4).

4. Hollow profile (1) according to one of the above claims, **characterised in that** the reshaped section (A2) of the basic profile (1.1) has been manufactured using internal high pressure forming of the basic profile (1.1).

## Revendications

1. Profilé creux (1) pour une structure porteuse d'un véhicule, lequel est formé à partir d'un profilé de base (1.1) par sa mise en forme par endroits si bien que le profilé creux (1) présente au moins une section (A1) non mise en forme s'étendant en direction du profilé et une section (A2) mise en forme s'étendant en direction du profilé, dans lequel le profilé de base (1.1) présente au moins une entretoise intérieure (4) attachée au niveau de parois latérales (2.1, 2.2) se faisant face et la forme de section transversale du profilé de base (1.1) présentant la section (A1) non mise en forme est réalisée dans la zone de transition de l'entretoise intérieure (4) en direction d'une paroi latérale (2.2) présentant un étranglement (5), **caractérisé en ce**
- **que** l'entretoise intérieure (4) est réalisée, par rapport aux parois latérales (2.1, 2.2, 3.1, 3.2) du profilé de base (1.1) présentant une section transversale constante, avec un épaississement,
- **que** la paroi latérale (2.2) présentant l'étranglement (5) se confond, dans la section (A2) mise en forme, avec une paroi latérale (2.2') étirée et rectiligne, et
- **que** les parois latérales (3.1, 3.2), s'étendant de manière parallèle par rapport à l'entretoise intérieure (4), de la section (A2) mise en forme sont réalisées avec une largeur (B) correspondant à la largeur (b) de l'entretoise intérieure (4).

2. Profilé creux (1) selon la revendication 1,
**caractérisé en ce que** la section (A2) mise en forme présentant une forme de section transversale modifiée par rapport au profilé de base (1.1) est réalisée avec une périphérie inchangée.

3. Profilé creux (1) selon la revendication 1 ou 2,
**caractérisé en ce que** les parois latérales (3.1, 3.2), s'étendant de manière parallèle par rapport à l'entretoise intérieure (4), du profilé de base (1.1) sont élargies de la profondeur d'étranglement (t) par rapport à la largeur (b) de l'entretoise intérieure (4).

4. Profilé creux (1) selon l'une quelconque des revendications précédentes,
**caractérisé en ce que** la section (A2) mise en forme du profilé de base (1.1) est fabriquée par une mise en forme intérieure à haute pression du profilé de base (1.1).
